# EUROPÄISCHE PATENTANMELDUNG

(11) **EP 3 598 525 A1**
(43) Veröffentlichungstag der Anmeldung: **22.01.2020**
(21) Anmeldenummer: 19186553.4
(22) Anmeldetag: 16.07.2019
(51) Int. Cl.: H01M 2/10, H01M 10/613, H01M 10/625, H01M 10/6556, F28D 1/053, F28F 1/02, F28F 9/02, F28F 9/14, B60K 11/02

(54) **BATTERIETRÄGER MIT WÄRMETAUSCHER FÜR EIN FAHRZEUG**

(30) Priorität: 17.07.2018 DE 102018117272
(71) Anmelder: Carl Freudenberg KG, 69469 Weinheim (DE)
(72) Erfinder: DÜPMEIER, Tobias, 33100 Paderborn (DE); GRUSSMANN, Elmar, 33184 Altenbeken-Buke (DE); STEINBRÜCK, Peter, 59494 Soest (DE); CLEMENS, Markus, 64385 Reichelsheim (DE); DOKTOR, Christoph, 64380 Rossdorf (DE); HELDMANN, Ralf, 69483 Wald-Michelbach (DE); SCHUHMANN, Michael, 68723 Schwetzingen (DE); ZIEGLER, Günter, 68259 Mannheim (DE); ZIFLE, Walter, 64297 Darmstadt (DE)
(74) Vertreter: Patentship Patentanwaltsgesellschaft mbH

(57) **Zusammenfassung**

Die Offenbarung betrifft einen Batterieträger mit Wärmetauscher (100) für die Aufnahme zumindest eines elektrischen Batteriemoduls (102) in einem Fahrzeug, mit einem Profilkörper (101), welcher eine Aufnahmewand (103) für die Aufnahme des elektrischen Batteriemoduls (102) aufweist, ein durch ein Fluid durchsetzbares Wärmetauscherprofil (106) zur Temperierung des elektrischen Batteriemoduls (102), wobei das Wärmetauscherprofil (106) eine Mehrzahl von Fluid-führenden Fluidhohlkanälen (107) aufweist, welche an einer Stirnseite (108-1, 108-2) des Wärmetauscherprofils (106) jeweils in eine Fluidaustrittsöffnung (111) münden, und einem Fluidsammelrohr (113-1, 113-2) zum Aufnehmen von aus der jeweiligen Fluidaustrittsöffnung (111) austretendem Fluid, wobei das Wärmetauscherprofil (106) mit dem Fluidsammelrohr (113-1, 113-2) klemmbar verbunden ist.

## Beschreibung

Die vorliegende Offenbarung betrifft einen Batterieträger mit Wärmetauscher für zumindest ein elektrisches Batteriemodul in einem Fahrzeug, insbesondere in einem elektrisch angetriebenen Fahrzeug.

Zur Halterung von Batteriemodulen für die Bereitstellung elektrischer Energie in elektrisch angetriebenen Fahrzeugen werden üblicherweise Batterieträger verwendet, welche zwischen den Achsen des Fahrzeugs angeordnet sind.

Zur effizienten Herstellung derartiger Batteriehalterungen können Profilelemente eingesetzt werden, welche in der Druckschrift DE 10 2012 100 977 B3 beschrieben sind.

Es ist die Aufgabe der vorliegenden Offenbarung, einen weiteren, effizienten Batterieträger zu schaffen.

Diese Aufgabe wird durch die Merkmale der unabhängigen Ansprüche gelöst. Vorteilhafte Ausführungsformen sind Gegenstand der abhängigen Ansprüche, der Beschreibung sowie der beiliegenden Figuren.

Die vorliegende Offenbarung basiert auf der Erkenntnis, dass die obige Aufgabe durch einen Batterieträger mit Wärmetauscher gelöst werden kann, welcher als Funktionsbauteil eine über die Halterung von Batteriemodulen hinausgehende, integrierte Funktionalität aufweist. Eine derartige Funktionalität ist die Temperierung der elektrischen Batteriemodule, insbesondere die Kühlung und/oder die Erwärmung der elektrischen Batteriemodule.

Auf diese Weise kann auf die Verwendung gesonderter Funktionskomponenten verzichtet werden, wodurch die Herstellungskosten gesenkt werden können.

Gemäß einem ersten Aspekt betrifft die Offenbarung einen Batterieträger mit Wärmetauscher für die Aufnahme zumindest eines elektrischen Batteriemoduls in einem Fahrzeug, mit einem Profilkörper, welcher eine Aufnahmewand für die Aufnahme des elektrischen Batteriemoduls aufweist, ein durch ein Fluid durchsetzbares Wärmetauscherprofil zur Temperierung des elektrischen Batteriemoduls, wobei das Wärmetauscherprofil eine Mehrzahl von Fluid-führenden Fluidhohlkanälen aufweist, welche an einer Stirnseite des Wärmetauscherprofils jeweils in eine Fluidaustrittsöffnung münden, und einem Fluidsammelrohr zum Aufnehmen von aus der jeweiligen Fluidaustrittsöffnung austretendem Fluid, wobei das Wärmetauscherprofil mit dem Fluidsammelrohr klemmbar verbunden ist.

Dadurch wird der Vorteil erreicht, dass die Klemmverbindung zwischen dem Fluidsammelrohr und dem Wärmetauscherprofil eine besonders einfach bereitzustellende Befestigung des Wärmetauscherprofils an dem Fluidsammelrohr ermöglicht, so dass eine besonders wirksame fluidtechnische Verbindung zwischen dem Fluidsammelrohr und den Fluidhohlkanälen in dem Wärmetauscherprofil bereitgestellt werden kann.

Eine Klemmverbindung zwischen dem Wärmetauscherprofil und dem Fluidsammelrohr ist hierbei eine kraftschlüssige Verbindung zwischen dem Wärmetauscherprofil und dem Fluidsammelrohr. Hierbei wird das Wärmetauscherprofil insbesondere in das Fluidsammelrohr eingeführt, bzw. eingesteckt, und das Fluidsammelrohr beaufschlagt das eingeführten, bzw. eingesteckten, Wärmetauscherprofil mit Kraft, um die kraftschlüssige Verbindung bereitzustellen und das Wärmetauscherprofil in dem Fluidsammelrohr zu halten.

Die Fluidhohlkanäle des Wärmetauscherprofils sind mit der Aufnahmewand des Profilkörpers thermisch gekoppelt. Dadurch steht das an der Aufnahmewand angeordnete zumindest eine elektrische Batteriemodul in einem thermischen Kontakt mit Fluid, das durch die Fluidhohlkanäle geleitet wird. Durch das Fluid kann dadurch eine wirksame Temperierung der elektrischen Batteriemodule sichergestellt werden, insbesondere eine wirksame Erwärmung und/oder Kühlung. Das Wärmetauscherprofil kann hierbei Teil eines Kältekreislaufs oder eines Wärmekreislaufs in dem Kraftfahrzeug sein.

Nach dem Wärmeaustausch mit den elektrischen Batteriemodulen kann das Fluid wirksam aus den Fluidhohlkanälen durch die jeweilige Fluidaustrittsöffnung direkt in das Fluidsammelrohr strömen, da die Klemmverbindung eine wirksame fluidtechnische Verbindung zwischen den Fluidhohlkanälen des Wärmetauscherprofils und dem Fluidsammelrohr ermöglicht. Da das Fluid anschließend aus dem Fluidsammelrohr wirksam abgeführt werden kann, wird eine kontinuierliche Abfuhr von Fluid aus den Fluidhohlkanälen des Wärmetauscherprofils sichergestellt.

Das Fluidsammelrohr ist insbesondere aus einem Kunststoff geformt. Das Fluidsammelrohr ist insbesondere einstückig ausgebildet. Das Fluidsammelrohr ist insbesondere als ein Spritzgussformteil ausgebildet, insbesondere als ein einstückiges Kunststoffspritzgussteil.

Dadurch wird der Vorteil erreicht, dass eine einstückige Ausbildung des Fluidsammelrohrs, bzw. die Ausbildung des Fluidsammelrohrs als Spritzgussteil, eine besonders vorteilhafte Fertigung des Batterieträgers mit Wärmetauscher ermöglicht wird.

Das Wärmetauscherprofil ist insbesondere aus ein Metall, bzw. einer Metalllegierung, insbesondere Aluminium, gebildet.

Das Wärmetauscherprofil ist insbesondere innerhalb des Profilkörpers gebildet.

Das Wärmetauscherprofil ist insbesondere einstückig mit dem Profilkörper gebildet.

In einer Ausführungsform verläuft das Fluidsammelrohr entlang der Stirnseite des Wärmetauscherprofils oder verläuft das Fluidsammelrohr an einer Stirnseite des Profilkörpers, wobei das Fluidsammelrohr insbesondere die jeweilige Stirnseite abdeckt.

Dadurch wird der Vorteil erreicht, dass wirksame fluidtechnische Verbindungen zwischen dem Fluidsammelrohr und den jeweiligen Fluidaustrittsöffnungen der jeweiligen Fluidhohlkanäle sichergestellt werden.

In einer Ausführungsform verläuft das Fluidsammelrohr entlang der jeweiligen Stirnseite des Wärmetauscherprofils oder des Profilkörpers und ist ausgebildet, das Fluid quer zu einer Fluidströmungsrichtung in dem jeweiligen Fluidhohlkanal des Wärmetauscherprofils abzuführen.

Dadurch wird der Vorteil erreicht, dass das an der Stirnseite verlaufende Fluidsammelrohr aus den jeweiligen Fluidhohlkanälen austretendes Fluid besonders wirksam abführen kann.

In einer Ausführungsform weist das Wärmetauscherprofil Hohlraumkanäle auf, wobei die Fluidhohlkanäle in den Hohlraumkanälen geformt, insbesondere extrudiert sind.

In einer Ausführungsform sind die jeweiligen Fluidhohlkanäle rohrförmig, rechteckförmig und/oder langlochförmig gebildet.

Dadurch wird der Vorteil erreicht, dass eine rohrförmige, rechteckförmige und/oder langlochförmige Ausbildung der jeweiligen Fluidhohlkanäle ein besonders wirksames fluidtechnisches Leiten des Fluids ermöglicht.

In einer Ausführungsform können die Fluidhohlkanäle eine Mehrzahl an Stegen umfassen, welche an einer Innenseite der Fluidhohlkanäle angeordnet sind, wobei die Stege insbesondere entlang einer Längsachse der Fluidhohlkanäle gebildet sind.

Die Stege vergrößern die für den Wärmeaustausch mit dem elektrischen Batteriemodul zur Verfügung stehende Fläche der jeweiligen Fluidhohlkanäle.

In einer Ausführungsform ist das Wärmetauscherprofil mit dem Fluidsammelrohr lösbar verbunden, wobei die Klemmverbindung zwischen dem Wärmetauscherprofil und dem Fluidsammelrohr insbesondere beschädigungsfrei lösbar ist.

Dadurch wird der Vorteil erreicht, dass durch die lösbare Klemmverbindung zwischen dem Wärmetauscherprofil und dem Fluidsammelrohr bei einer Demontage, oder Wartung des Batterieträgers mit Wärmetauscher das Wärmetauscherprofil einfach von dem Fluidsammelrohr getrennt werden kann. Eine beschädigungsfrei lösbare Klemmverbindung bedeutet hierbei, dass die Klemmverbindung zwischen dem Wärmetauscherprofil und dem Fluidsammelrohr lösbar ist, ohne das Wärmetauscherprofil oder das Fluidsammelrohr beim Lösen der Klemmverbindung zu beschädigen. Das Lösen der Klemmverbindung kann hierbei insbesondere durch ein Ausstecken des Wärmetauscherprofils aus dem Fluidsammelrohr sichergestellt werden.

In einer Ausführungsform weist das Fluidsammelrohr eine Aufnahmedurchbruch auf, wobei das Wärmetauscherprofil in der Aufnahmedurchbruch aufgenommen, insbesondere eingesteckt, ist, um die Klemmverbindung zwischen dem Wärmetauscherprofil und dem Fluidsammelrohr zu bilden.

Dadurch wird der Vorteil erreicht, dass durch das Aufnehmen, insbesondere Einstecken, des Wärmetauscherprofils in dem Aufnahmedurchbruch des Fluidsammelrohrs besonders einfach eine wirksame Klemmverbindung zwischen dem Wärmetauscherprofil und dem Fluidsammelrohr bereitgestellt werden kann. In einer Ausführungsform ist das in dem Aufnahmedurchbruch eingesteckte Wärmetauscherprofil aussteckbar, um die Klemmverbindung zwischen dem Wärmetauscherprofil und dem Fluidsammelrohr zu lösen, insbesondere beschädigungsfrei zu lösen.

In einer Ausführungsform weist das Fluidsammelrohr einen Klemmabschnitt auf, welcher einstückig mit dem Fluidsammelrohr geformt ist, wobei in dem Klemmabschnitt der Aufnahmedurchbruch zur Aufnahme des Wärmetauscherprofils geformt ist, und wobei der Klemmabschnitt und das Fluidsammelrohr insbesondere als ein Spritzgussformteil geformt sind.

Dadurch wird der Vorteil erreicht, dass der Klemmabschnitt eine wirksame Stabilisierung des in dem Aufnahmedurchbruch aufgenommenen Wärmetauscherprofils sicherstellt. Durch die einstückige Ausbildung von Klemmabschnitt und Fluidsammelrohr, insbesondere als Spritzgussformteil, ist eine vorteilhafte Herstellbarkeit des Fluidsammelrohrs sichergestellt und kann eine besonders stabile Anbindung des Klemmabschnitts an dem Fluidsammelrohr sichergestellt werden.

In einer Ausführungsform weist das Fluidsammelrohr ein Dichtungselement auf, um eine fluiddichte Verbindung zwischen dem Fluidsammelrohr und dem mit dem Fluidsammelrohr verbundenen Wärmetauscherprofil bereitzustellen, wobei insbesondere in dem Klemmabschnitt eine Klemmabschnittaussparung geformt ist, in welcher das Dichtungselement aufgenommen ist.

Dadurch wird der Vorteil erreicht, dass durch das Dichtungselement sichergestellt wird, dass auch bei auf den Batterieträger mit Wärmetauscher wirkenden starken mechanischen Belastungen an der Verbindungsstelle zwischen dem Fluidsammelrohr und dem Wärmetauscherprofil kein Fluid austritt.

In einer Ausführungsform ist die Klemmabschnittaussparung als eine langlochförmige Klemmabschnittaussparung geformt, wobei das Dichtungselement als ein oval geformtes Dichtungselement geformt ist, das in der langlochförmigen Klemmabschnittaussparung aufgenommen ist.

Dadurch wird der Vorteil erreicht, dass eine wirksame Aufnahme des Dichtungselements in der Klemmabschnittaussparung des Klemmabschnitts sichergestellt wird. In einer alternativen Ausführungsform ist die Klemmabschnittaussparung als eine rechteckige Klemmabschnittaussparung geformt, wobei das Dichtungselement als ein rechteckig geformtes Dichtungselement geformt ist, das in der rechteckigen Klemmabschnittaussparung aufgenommen ist.

In einer Ausführungsform weist das Dichtungselement einen Dichtungsdurchbruch auf, und ist der Dichtungsdurchbruch fluchtend zu dem Aufnahmedurchbruch des Fluidsammelrohrs angeordnet.

Dadurch wird der Vorteil erreicht, dass das Wärmetauscherprofil durch den Dichtungsdurchbruch des Dichtungselements und durch den Aufnahmedurchbruch in dem Fluidsammelrohr wirksam in das Fluidsammelrohr eingesteckt werden kann, um die Klemmverbindung zwischen dem Wärmetauscherprofil und dem Fluidsammelrohr zu bilden.

In einer Ausführungsform ist das Dichtungselement aus einem ersten Kunststoff geformt, ist der Klemmabschnitt aus einem zum ersten Kunststoff unterschiedlichen zweiten Kunststoff geformt, wobei das Dichtungselement und der Klemmabschnitt einteilig geformt sind, und wobei insbesondere das Dichtungselement und der Klemmabschnitt als ein gemeinsames Spritzgussformteil geformt sind.

Dadurch wird der Vorteil erreicht, dass durch die unterschiedlichen Kunststoffe des Dichtungselements und des Klemmabschnitts eine wirksame Befestigung zwischen dem Dichtungselement und dem Klemmabschnitt sichergestellt werden kann. Im Rahmen eines Zweikomponenten-Spritzgussverfahrens kann somit ein gemeinsames Spritzgussformteil bereitgestellt werden, welches das Dichtungselement und den Klemmabschnitt umfasst.

In einer Ausführungsform umfasst der Batterieträger mit Wärmetauscher ferner ein Befestigungselement, welches ausgebildet ist, das Dichtungselement und das an dem Dichtungselement anliegende Wärmetauscherprofil mit Kraft zu beaufschlagen, um einen fluiddichten Kontakt zwischen dem Dichtungselement und dem Wärmetauscherprofil bereitzustellen, wobei das Befestigungselement insbesondere zumindest einen Befestigungsvorsprung aufweist, wobei der Klemmabschnitt insbesondere zumindest eine Befestigungsnut aufweist, wobei das Befestigungselement mit dem Befestigungsvorsprung in die Befestigungsnut des Klemmabschnitts eingreift, um das Dichtungselement wirksam in dem Klemmabschnitt zu befestigen.

Dadurch wird der Vorteil erreicht, dass durch die durch das Befestigungselement verursachte kraftschlüssige, insbesondere kraftnebenschlüssige, Verbindung zwischen Dichtungselement und dem Wärmetauscherprofil eine besonders wirksame fluiddichte Verbindung zwischen dem Dichtungselement und dem Wärmetauscherprofil bereitgestellt werden kann, so dass ein Flüssigkeitsaustritt verhindert werden kann. Insbesondere liegt das Wärmetauscherprofil zumindest abschnittsweise an dem Befestigungselement an, so dass das Befestigungselement als ein weiterer Auflagepunkt für das Wärmetauscherprofil dient und dadurch im Betrieb bei einer Auslenkung, bzw. Bewegung des Dichtungselements eine wirksame fluiddichte Abdichtung zwischen dem Dichtungselement und dem Wärmetauscherprofil sichergestellt werden kann. Insbesondere ist das Befestigungselement als eine Befestigungsklammer ausgebildet.

Durch das Befestigungselement wird eine wirksame Befestigung des Dichtungselements an dem Klemmabschnitt erreicht. Insbesondere kann das Befestigungselement zwei Befestigungsvorsprünge aufweisen, welche jeweils auf voneinander abgewandten Seiten des Befestigungselements angeordnet sind, wobei jeder der Befestigungsvorsprünge jeweils in eine Befestigungsnut eingreift, wobei die Befestigungsnuten auf voneinander abgewandten Seiten des Klemmabschnitts angeordnet sind. Insbesondere ist der zumindest eine Befestigungsvorsprung als ein länglicher Befestigungsvorsprung ausgebildet, welcher in zumindest eine längliche Befestigungsnut eingreift.

In einer Ausführungsform weist das Fluidsammelrohr eine Mehrzahl von nebeneinander angeordneten Aufnahmedurchbrüchen auf, wobei der Batterieträger mit Wärmetauscher eine Mehrzahl von durch ein Fluid durchsetzbare und nebeneinander angeordnete Wärmetauscherprofile aufweist, wobei die Wärmetauscherprofile jeweils in einem der Aufnahmedurchbrüche aufgenommen sind, und wobei die Wärmetauscherprofile jeweils mit dem Fluidsammelrohr klemmbar verbunden sind.

Dadurch wird der Vorteil erreicht, dass durch die Mehrzahl an nebeneinander angeordneten Wärmetauscherprofilen eine vorteilhafte Menge an Fluid in das Fluidsammelrohr geleitet werden kann. Für die Mehrzahl der Wärmetauscherprofile gemäß dem ersten Aspekt gelten dieselben weiteren Ausführungsformen wie für ein Wärmetauscherprofil gemäß dem ersten Aspekt. Insbesondere sind die Wärmetauscherprofile mit dem Fluidsammelrohr jeweils durch eine lösbare, insbesondere beschädigungsfreie, Klemmverbindung verbunden. Insbesondere sind die Wärmetauscherprofile parallel zueinander in dem Batterieträger mit Wärmetauscher angeordnet. Insbesondere erstrecken sich die Wärmetauscherprofile quer zu dem Fluidsammelrohr.

In einer Ausführungsform weist der Batterieträger mit Wärmetauscher ein erstes Fluidsammelrohr und ein dem ersten Fluidsammelrohr gegenüberliegendes zweites Fluidsammelrohr auf, wobei das erste und zweite Fluidsammelrohr jeweils eine Mehrzahl von nebeneinander angeordneten weiteren Aufnahmedurchbrüchen aufweist, wobei die Wärmetauscherprofile eine erste Stirnseite und eine der ersten Stirnseite abgewandte zweite Stirnseite aufweisen, wobei die Wärmetauscherprofile an der ersten Stirnseite mit dem ersten Fluidsammelrohr verbunden sind, und wobei die Wärmetauscherprofile an der zweiten Stirnseite mit dem zweiten Fluidsammelrohr verbunden sind.

Dadurch wird der Vorteil erreicht, dass durch die zwischen dem ersten und zweiten Fluidsammelrohr angeordneten Wärmetauscherprofile eine wirksame Fluidleitung zwischen dem ersten und zweiten Fluidsammelrohr durch die Mehrzahl an Wärmetauscherprofilen sichergestellt werden kann. Für die Mehrzahl der Wärmetauscherprofile gemäß dem ersten Aspekt gelten dieselben weiteren Ausführungsformen wie für ein Wärmetauscherprofil gemäß dem ersten Aspekt. Insbesondere sind die Wärmetauscherprofile mit dem ersten und zweiten Fluidsammelrohr jeweils durch eine Klemmverbindung verbunden. Insbesondere sind die Wärmetauscherprofile mit dem ersten und zweiten Fluidsammelrohr jeweils durch eine lösbare, insbesondere beschädigungsfreie, Klemmverbindung verbunden. Insbesondere sind die Wärmetauscherprofile parallel zueinander in dem Batterieträger mit Wärmetauscher angeordnet. Insbesondere erstrecken sich die Wärmetauscherprofile quer zu dem ersten und zweiten Fluidsammelrohr.

In einer Ausführungsform ist das zumindest eine Wärmetauscherprofil in dem Profilkörper integriert, und/oder ist das zumindest eine Wärmetauscherprofil mit dem Profilkörper lösbar verbunden.

Dadurch wird der Vorteil erreicht, dass durch das Integrieren des Wärmetauscherprofils in dem Profilkörper das Wärmetauscherprofil innerhalb des Profilkörpers besonders vorteilhaft vor Beschädigungen geschützt werden kann. Insbesondere ist das Wärmetauscherprofil unverlierbar in dem Profilkörper integriert, um eine besonders stabile Verbindung zwischen dem Wärmetauscherprofil und dem Profilkörper sicherzustellen. Alternativ oder zusätzlich ist auch eine lösbare Verbindung zwischen dem Wärmetauscherprofil und dem Profilkörper möglich, so dass das Wärmetauscherprofil von dem Profilkörper gelöst werden kann, um beispielsweise das Wärmetauscherprofil zu reinigen oder zu reparieren.

In einer Ausführungsform liegt das Wärmetauscherprofil an der Aufnahmewand an.

Dadurch wird der Vorteil erreicht, dass durch das Anliegen des Wärmetauscherprofils an der Aufnahmewand eine besonders wirksame thermisch leitende Verbindung zwischen dem Wärmetauscherprofil und dem Profilkörper sichergestellt werden kann.

In einer Ausführungsform liegt das Wärmetauscherprofil auf der Aufnahmewand auf, wobei das elektrische Batteriemodul auf das Wärmetauscherprofil aufsetzbar ist, oder ist das Wärmetauscherprofil an einer dem elektrischen Batteriemodul abgewandten Bodenwand der Aufnahmewand befestigt, insbesondere stoffschlüssig oder kraftschlüssig, befestigt.

Dadurch wird der Vorteil erreicht, dass durch ein auf der Aufnahmewand aufgesetztes Wärmetauscherprofil, sicherstellt wird, dass das Wärmetauscherprofil in dem Profilkörper besonders wirksam aufgenommen, bzw. umschlossen, wird. Ein an der Bodenwand befestigtes Wärmetauscherprofil hingegen ist von der Unterseite eines Fahrzeuges besonders vorteilhaft zugänglich.

In einer Ausführungsform ist das Wärmetauscherprofil innerhalb des Profilkörpers gebildet, wobei der Profilkörper eine Stirnseite und eine der Aufnahmewand abgewandte Bodenwand aufweist, wobei die Fluidhohlkanäle zwischen der Aufnahmewand und der Bodenwand verlaufen und an der Stirnseite jeweils in die jeweilige Fluidaustrittsöffnung münden, und wobei das Fluidsammelrohr an der Aufnahmewand sowie an der Bodenwand durch die Klemmverbindung gehalten ist.

Dadurch wird der Vorteil erreicht, dass ein in den Profilkörper integriertes Wärmetauscherprofil einen besonderen Schutz des Wärmetauscherprofils vor Beschädigungen sicherstellt.

In einer Ausführungsform umgreift das Fluidsammelrohr die Aufnahmewand und die Bodenwand zumindest abschnittsweise, um die Klemmverbindung zu bilden, so dass die Fluidhohlkanäle im Inneren des Fluidsammelrohrs münden.

Dadurch wird der Vorteil erreicht, dass durch das Umgreifen der Aufnahmewand und der Bodenwand durch das Fluidsammelrohr, eine besonders wirksame klemmende Befestigung des Profilkörpers, bzw. Wärmetauscherprofils an dem Fluidsammelrohr sichergestellt werden kann. Da die Fluidhohlkanäle im Inneren des Fluidsammelrohrs münden, kann kein Fluid beim Einströmen in das Fluidsammelrohr austreten.

In einer Ausführungsform ist das Fluidsammelrohr schellenförmig mit einem ersten Haltesteg und einem zweiten Haltesteg geformt, wobei das Wärmetauscherprofil mit der Stirnseite zwischen den ersten Haltesteg und den zweiten Haltesteg eingeführt ist, und wobei der erste und zweite Haltesteg insbesondere einstückig mit dem Fluidsammelrohr gebildet sind.

Dadurch wird der Vorteil erreicht, dass der erste und zweite Haltesteg des Fluidsammelrohrs eine besonders wirksame klemmende Befestigung des Wärmetauscherprofils an dem Fluidsammelrohr sicherstellen. In einer Ausführungsform liegt hierbei der erste Haltesteg an der Aufnahmewand des Profilkörpers, insbesondere kraftschlüssig, an, und liegt der zweite Haltesteg an einer der Aufnahmewand des Profilkörpers abgewandten Bodenwand des Profilkörpers, insbesondere kraftschlüssig, an.

In einer Ausführungsform schließt die Stirnseite des Profilkörpers oder die Stirnseite des Wärmetauscherprofils im Inneren des Fluidsammelrohrs bündig mit den Haltestegen, insbesondere bündig mit den Enden der Haltestege, ab.

Dadurch wird der Vorteil erreicht, dass eine eben ausgebildete Innenoberfläche des Fluidsammelrohrs, ein besonders wirksames Einströmen des Fluids aus den Fluidaustrittsöffnungen in das Fluidsammelrohr ermöglicht, und dass zudem Druckverluste reduziert werden können. Insbesondere kann hierbei eine angeraute Oberfläche an dem Verbindungsbereich zwischen den Haltestegen und der Aufnahmewand, bzw. Bodenwand, gebildet sein, und insbesondere kann der Profilkörper bis zur Bundwand des Fluidsammelrohrs zurückgesetzt sein.

In einer Ausführungsform ist das Fluidsammelrohr zwischen den Haltestegen durchtrennt, um die zwischen den Haltestegen geführte Stirnseite aufzunehmen.

Dadurch wird der Vorteil erreicht, dass eine besonders vorteilhafte Aufnahme des Wärmetauscherprofils an dem Fluidsammelrohr sichergestellt wird.

In einer Ausführungsform weist das Fluidsammelrohr seitlich einen Fluidstutzen zum Abführen von Fluid aus dem Fluidsammelrohr auf, wobei der Fluidstutzen insbesondere an das Fluidsammelrohr endseitig angeformt ist.

Dadurch wird der Vorteil erreicht, dass Fluid durch den Fluidstutzen vorteilhaft aus dem Fluidsammelrohr abgeführt werden kann. Dadurch wird der Vorteil erreicht, dass Fluid an der Endseite des Fluidsammelrohrs wirksam durch den Fluidstutzen aus dem Fluidsammelrohr ausgeleitet werden kann.

In einer Ausführungsform weist der Fluidstutzen umlaufende Ringlamellen für die kraftschlüssige Befestigung des Fluidstutzens auf.

Dadurch wird der Vorteil erreicht, dass die umlaufenden Ringlamellen eine wirksame kraftschlüssige Befestigung des Fluidstutzens mit einer weiteren Verbindungsleitung zum Ableiten des Fluids ermöglicht.

In einer Ausführungsform ist das Fluidsammelrohr an einem dem Fluidstutzen abgewandten Ende fluiddicht abgeschlossen.

In einer Ausführungsform weist das Fluidsammelrohr einen Innendurchmesser zwischen 15 mm und 28 mm, insbesondere 22 mm, auf.

Ein Innendurchmesser in diesem Bereich ermöglicht, dass auch eine größere Menge an Fluid aus dem Fluidsammelrohr wirksam abgeführt werden kann.

In einer Ausführungsform sind die Fluidhohlkanäle innerhalb oder unterhalb der jeweiligen Aufnahmewand angeordnet und mit der Aufnahmewand thermisch gekoppelt.

Dadurch wird der Vorteil erreicht, dass durch die innerhalb oder unterhalb der jeweiligen Aufnahmewand angeordneten Fluidhohlkanäle die Ausbildung einer Oberseite der Aufnahmewand für die Aufnahme des elektrischen Batteriemoduls durch die Fluidhohlkanäle nicht beeinträchtigt wird. Durch die thermische Kopplung zwischen den Fluidhohlkanälen und der Aufnahmewand kann ein wirksamer Wärmeaustausch zwischen den Fluidhohlkanälen und der Aufnahmewand stattfinden.

Gemäß einem zweiten Aspekt betrifft die Offenbarung ein Verfahren zum Herstellen eines Batterieträgers mit Wärmetauscher für die Aufnahme zumindest eines elektrischen Batteriemoduls in einem Fahrzeug, mit: Bereitstellen eines Profilkörpers, welcher eine Aufnahmewand für die Aufnahme des elektrischen Batteriemoduls aufweist, Bereitstellen eines durch ein Fluid durchsetzbaren Wärmetauscherprofils zur Temperierung des elektrischen Batteriemoduls, wobei das Wärmetauscherprofil eine Mehrzahl von Fluid-führenden Fluidhohlkanälen aufweist, welche an einer Stirnseite des Wärmetauscherprofils jeweils in eine Fluidaustrittsöffnung münden; und Klemmen des Wärmetauscherprofils an ein Fluidsammelrohr zum Aufnehmen von aus der jeweiligen Fluidaustrittsöffnung austretendem Fluid, um das Fluidsammelrohr mittels einer Klemmverbindung an dem Wärmetauscherprofil zu befestigen.

Gemäß einem dritten Aspekt betrifft die Offenbarung ein Kühlsystem für ein Fahrzeug, mit einem Fluid-führenden Kühlkreislauf, wobei in dem Kühlkreislauf ein Fahrzeugkühler zum Kühlen eines Fahrzeugantriebs angeordnet ist, und wobei der Batterieträger mit Wärmetauscher nach dem ersten Aspekt an den Fluid-führenden Kühlkreislauf fluidtechnisch angeschlossen ist, so dass das Wärmetauscherprofil durch zumindest einen Teil des Fluids des Fluid-führenden Kühlkreislaufs durchströmbar ist, um die elektrische Batterie zu temperieren.

Dadurch wird der Vorteil erreicht, dass ein bereits in dem Fahrzeug vorhandenes Kühlsystem zum Temperieren des elektrischen Batteriemoduls genutzt werden kann. Durch den fluidtechnischen Anschluss zwischen dem Batterieträger mit Wärmetauscher und dem Fluid-führenden Kühlkreislauf des Kühlsystems kann Kühlflüssigkeit aus dem Kühlsystem für den Batterieträger mit Wärmetauscher abgezweigt werden. Dadurch kann der Batterieträger mit Wärmetauscher wirksam gekühlt werden, ohne dass ein separates Kühlsystem für den Batterieträger mit Wärmetauscher in dem Fahrzeug verbaut werden muss.

Weitere Ausführungsbeispiele werden Bezug nehmend auf die beiliegenden Figuren erläutert. Es zeigen:
- Fig. 1: Einen Batterieträger mit Wärmetauscher gemäß einer ersten Ausführungsform;
- Fig. 2: Einen Batterieträger mit Wärmetauscher gemäß einer zweiten Ausführungsform;

- Fig. 3: Eine Klemmverbindung zwischen einem Fluidsammelrohr und einem Profilkörper eines Batterieträgers mit Wärmetauscher gemäß einer dritten Ausführungsform;
- Fig. 4: Eine perspektivische Ansicht der Klemmverbindung gemäß der dritten Ausführungsform;
- Fig. 5: Einen Fluidstutzen eines Fluidsammelrohrs eines Batterieträgers mit Wärmetauscher;
- Fig. 6: Ein Wärmetauscherprofil in einer stirnseitigen Ansicht;
- Fig. 7: Ein Fluidsammelrohr eines Batterieträgers mit Wärmetauscher gemäß einer vierten Ausführungsform;
- Fig. 8: Eine schematische Darstellung eines Batterieträgers mit Wärmetauscher in Aufsicht; und
- Fig. 9: Ein Verfahren zum Herstellen eines Batterieträgers mit Wärmetauscher.

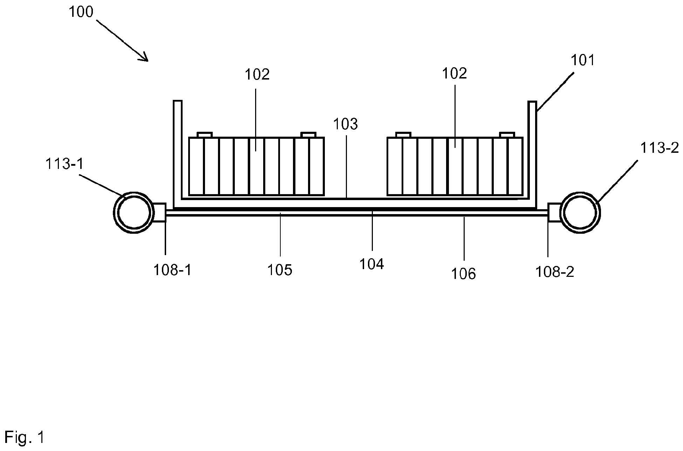

Fig. 1 zeigt einen Batterieträger mit Wärmetauscher 100 gemäß einer ersten Ausführungsform in einer Querschnittdarstellung. Der Batterieträger mit Wärmetauscher 100 ist ausgebildet zumindest ein elektrisches Batteriemodul aufzunehmen.

Der Batterieträger mit Wärmetauscher 100 weist einen Profilkörper 101 auf, welcher eine Aufnahmewand 103 für die Aufnahme des zumindest einen elektrischen Batteriemoduls 102 aufweist, und welcher eine der Aufnahmewand 103 abgewandte Bodenwand 104 aufweist.

Das elektrische Batteriemodul 102 kann hierzu auf die Aufnahmewand 103 des Profilkörpers 101 aufgesetzt werden. Falls mehrere elektrische Batteriemodule 102 auf die Aufnahmewand 103 aufgesetzt werden, kann die Aufnahmewand 103 eine Vielzahl von Modulaufnahmen aufweisen, welche durch Trennwände voneinander abtrennt sind, und damit Nischen, bzw. Mulden für die jeweiligen elektrischen Batteriemodule 102 bilden. Die Trennwände können sich hier entlang einer Längsrichtung, einer Querrichtung und/oder einer Diagonalrichtung auf der Aufnahmewand 103 erstrecken.

Der Profilkörper 101 kann eine weitere Funktion aufweisen und als eine Unterbodenplatte des Kraftfahrzeuges ausgebildet sein, welche einen Unterfahrschutz für das Kraftfahrzeug bereitstellt.

Der Batterieträger mit Wärmetauscher 100 weist ferner ein Wärmetauscherprofil 106 auf, welcher ausgebildet ist, das zumindest eine elektrische Batteriemodul 102 zu temperieren, insbesondere zu kühlen und/oder zu erwärmen. Das Wärmetauscherprofil 106 wird hierbei von einem Fluid durchsetzt, wobei das Fluid Wärme von dem zumindest einen elektrischen Batteriemodul 102 aufnehmen und wirksam von dem elektrischen Batteriemodul 102 abführen kann und/oder wobei das Fluid Wärme an das zumindest eine elektrische Batteriemodul 102 abgeben und das elektrische Batteriemodul 102 wirksam erwärmen kann. Hierdurch kann während des Betriebs des zumindest einen elektrischen Batteriemoduls 102 eine gleichbleibende Temperatur des Batteriemoduls 102 sichergestellt werden, was sich vorteilhaft auf die Leistungsparameter und auf die Lebensdauer des elektrischen Batteriemoduls 102 auswirkt.

Das Wärmetauscherprofil 106 ist hierbei insbesondere mit dem Profilkörper 101 lösbar verbunden und liegt an der Aufnahmewand 103 an. Das Wärmetauscherprofil 106 ist hierbei insbesondere an der dem elektrischen Batteriemodul 102 abgewandten Bodenwand 104 der Aufnahmewand 103 befestigt, insbesondere stoffschlüssig oder kraftschlüssig befestigt. Eine stoffschlüssige Befestigung zwischen dem Wärmetauscherprofil 106 und der Aufnahmewand 103 kann hierbei beispielweise durch wärmeleitende Klebstoffe ermöglicht werden. Eine kraftschlüssige Befestigung zwischen dem Wärmetauscherprofil 106 und der Aufnahmewand 103 kann hierbei beispielweise durch Spann- oder Federelemente ermöglicht werden, welche das Wärmetauscherprofil 106 mit Kraft beaufschlagen.

Um wirksam Wärme von dem elektrischen Batteriemodul 102 abzuführen, weist das Wärmetauscherprofil 106 hierbei eine Mehrzahl von in Fig. 1 nicht dargestellten Fluid-führenden Fluidhohlkanälen 107 auf, welche ausgebildet sind Fluid zu leiten. Die Fluidhohlkanäle 107, sind in Hohlraumkanälen 105 des Wärmetauscherprofils 106 gebildet, insbesondere extrudiert. Die Fluidhohlkanäle 107 des Wärmetauscherprofils 106 sind hierbei mit der Aufnahmewand 103 thermisch gekoppelt.

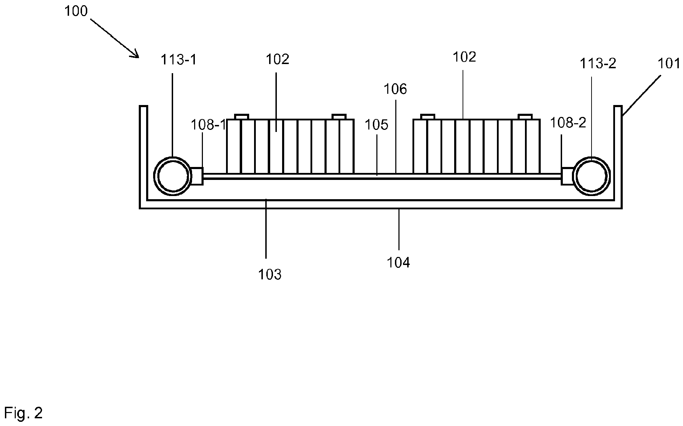

An den Stirnseiten 108-1, 108-2 des Wärmetauscherprofils 106 münden die Fluidhohlkanäle 107 jeweils in eine in Fig. 2 nicht dargestellte Fluidaustrittsöffnung 111. Durch die Fluidhohlkanäle 107 strömendes Fluid kann aus den jeweiligen Fluidaustrittsöffnungen 111 austreten und kann in einem jeweiligen Fluidsammelrohr 113-1, 113-2 gesammelt und anschließend gemeinsam abgeführt werden. Das erste Fluidsammelrohr 113-1 ist hierbei an der ersten Stirnseite 108-1 des Wärmetauscherprofils 106 angeordnet. Das zweite Fluidsammelrohr 113-2 ist hierbei an einer der ersten Stirnseite 108-1 abgewandten zweiten Stirnseite 108-2 des Wärmetauscherprofils 106 angeordnet. Das jeweilige Fluidsammelrohr 113-1, 113-2 erstreckt sich hierbei entlang der jeweiligen Stirnseite 108-1, 108-2 des Wärmetauscherprofils 106 und deckt die jeweilige Stirnseite 108-1, 108-2 des Wärmetauscherprofils 106 ab.

Hierbei ist das Fluidsammelrohr 113-1, 113-2 insbesondere ein einstückiges Kunststoffspritzgussteil.

Das Fluidsammelrohr 113-1, 113-2 ist insbesondere aus Kunststoff geformt und ist an dem Wärmetauscherprofil 106 durch eine Klemmverbindung gehalten. Die Fluidhohlkanäle 107 münden im Inneren des Fluidsammelrohrs 113-1, 113-2. Somit kann eine einfach zu fertigende fluidtechnische Verbindung zwischen dem Fluidsammelrohr 113-1, 113-2 und dem Wärmetauscherprofil 106 sichergestellt werden.

Fig. 2 zeigt einen Batterieträger mit Wärmetauscher 100 gemäß einer zweiten Ausführungsform in einer Querschnittdarstellung. Der Batterieträger mit Wärmetauscher 100 ist ausgebildet zumindest ein elektrisches Batteriemodul 102 aufzunehmen.

Der Batterieträger mit Wärmetauscher 100 weist einen Profilkörper 101 auf, welcher eine Aufnahmewand 103 für die Aufnahme des zumindest einen elektrischen Batteriemoduls 102 aufweist, und welcher eine der Aufnahmewand 103 abgewandte Bodenwand 104 aufweist.

Der Profilkörper 101 kann eine weitere Funktion aufweisen und als eine Unterbodenplatte des Kraftfahrzeuges ausgebildet sein, welche einen Unterfahrschutz für das Kraftfahrzeug bereitstellt.

Der Batterieträger mit Wärmetauscher 100 weist ferner ein Wärmetauscherprofil 106 auf, welcher ausgebildet ist, das zumindest eine elektrische Batteriemodul 102 zu Temperieren, insbesondere zu kühlen und/oder zu erwärmen.

Das Wärmetauscherprofil 106 ist hierbei mit dem Profilkörper 101 lösbar verbunden und liegt an der Aufnahmewand 103 an. Das Wärmetauscherprofil 106 liegt hierbei auf der Aufnahmewand 103 auf und das Batteriemodul 102 ist hierbei auf das Wärmetauscherprofil 106 aufgesetzt. Die Befestigung zwischen dem elektrischen Batteriemodul 102 und dem Wärmetauscherprofil 106 kann durch das Eigengewicht des elektrischen Batteriemoduls 102 sichergestellt werden. Alternativ kann eine stoffschlüssige Befestigung, insbesondere durch Kleben und/oder Schweißen, und/oder eine kraftschlüssige, insbesondere durch Spann- oder Federelemente, vorgesehen sein.

Um wirksam Wärme von dem elektrischen Batteriemodul 102 abzuführen, weist das Wärmetauscherprofil 106 hierbei eine Mehrzahl von in Fig. 2 nicht dargestellten Fluid-führenden Fluidhohlkanälen 107 auf, welche ausgebildet sind Fluid zu leiten. Die Fluidhohlkanäle 107, sind in Hohlraumkanälen 105 des Wärmetauscherprofils 106 gebildet, insbesondere extrudiert.

An der jeweiligen Stirnseite 108-1, 108-2 des Wärmetauscherprofils 106 münden die Fluidhohlkanäle 107 jeweils in eine in Fig. 2 nicht dargestellte Fluidaustrittsöffnung 111. Durch die Fluidhohlkanäle 107 strömendes Fluid kann aus den jeweiligen Fluidaustrittsöffnungen 111 austreten und kann jeweils in einem Fluidsammelrohr 113-1, 113-2 gesammelt und anschließend gemeinsam abgeführt werden. Das jeweilige Fluidsammelrohr 113-1, 113-2 erstreckt sich hierbei entlang der jeweiligen Stirnseite 108-1, 108-2 des Wärmetauscherprofils 106 und deckt die jeweilige Stirnseite 108-1, 108-2 des Wärmetauscherprofils 106 ab.

Das Fluidsammelrohr 113-1, 113-2 ist insbesondere aus Kunststoff geformt und ist an dem Wärmetauscherprofil 106 durch eine Klemmverbindung gehalten und die Fluidhohlkanäle 107 münden im Inneren des Fluidsammelrohrs 113-1, 113-2.

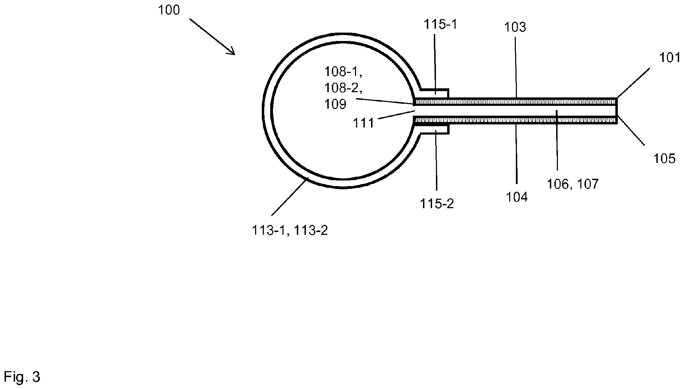

Fig. 3 zeigt eine perspektivische Ansicht einer Klemmverbindung zwischen einem Fluidsammelrohr 113-1, 113-2 und einem Profilkörper 101 eines Batterieträgers mit Wärmetauscher 100 für die Aufnahme zumindest eines elektrischen Batteriemoduls 102 in einem Fahrzeug gemäß einer dritten Ausführungsform in einer Querschnittdarstellung. Der Batterieträger mit Wärmetauscher 100 weist einen Profilkörper 101 auf, welcher eine Aufnahmewand 103 für die Aufnahme des zumindest einen elektrischen Batteriemoduls 102 aufweist, und welcher eine der Aufnahmewand 103 abgewandte Bodenwand 104 aufweist.

Zumindest ein in der Fig. 3 nicht dargestelltes elektrisches Batteriemodul 102 kann hierzu auf die Aufnahmewand 103 des Profilkörpers 101 aufgesetzt werden. Falls mehrere elektrische Batteriemodule 102 auf die Aufnahmewand 103 aufgesetzt werden, kann die Aufnahmewand 103 eine Vielzahl von Modulaufnahmen aufweisen, welche durch Trennwände voneinander abtrennt sind, und damit Nischen, bzw. Mulden für die jeweiligen elektrischen Batteriemodule 102 bilden. Die Trennwände können sich hier entlang einer Längsrichtung, einer Querrichtung und/oder einer Diagonalrichtung auf der Aufnahmewand 103 erstrecken.

Der Profilkörper 101 kann eine weitere Funktion aufweisen und als eine Unterbodenplatte des Kraftfahrzeuges ausgebildet sein, welche einen Unterfahrschutz für das Kraftfahrzeug bereitstellt.

Zwischen der Aufnahmewand 103 und der Bodenwand 104 sind Hohlraumkanäle 105 in dem Profilkörper 101 geformt.

Innerhalb des Profilkörpers 101 ist ein Wärmetauscherprofil 106 gebildet, welches ausgebildet ist, das zumindest eine elektrische Batteriemodul 102 zu temperieren, insbesondere zu kühlen und/oder zu erwärmen. Das Wärmetauscherprofil 106 wird hierbei von einem Fluid durchsetzt, wobei das Fluid Wärme von dem zumindest einen elektrischen Batteriemodul 102 aufnehmen und wirksam von dem elektrischen Batteriemodul 102 abführen kann und/oder wobei das Fluid Wärme an das zumindest eine elektrische Batteriemodul 102 abgeben und das elektrische Batteriemodul 102 wirksam erwärmen kann. Hierdurch kann während des Betriebs des zumindest einen elektrischen Batteriemoduls 102 eine gleichbleibende Temperatur des Batteriemoduls 102 sichergestellt werden, was sich vorteilhaft auf die Leistungsparameter und auf die Lebensdauer des elektrischen Batteriemoduls 102 auswirkt.

Das Wärmetauscherprofil 106 weist hierbei eine Mehrzahl von Fluid-führenden Fluidhohlkanälen 107 auf, welche ausgebildet sind Fluid zu leiten. Die Fluidhohlkanäle 107, sind in den Hohlraumkanälen 105 gebildet, insbesondere extrudiert.

Die Fluidhohlkanäle 107 sind hierbei zwischen der Aufnahmewand 103 und der Bodenwand 104 gebildet und sind mit der Aufnahmewand 103 thermisch gekoppelt. Die Fluidhohlkanäle 107 verlaufen in dem Profilkörper 101 beispielsweise geradlinig nebeneinander, wodurch eine parallele Anordnung von Fluidhohlkanälen 107 entsteht. Die Fluidhohlkanäle 107 können voneinander beabstandet angeordnet sein, wodurch eine wirksame thermische Kopplung mit der Aufnahmewand 103 über die gesamte Fläche des Wärmetauscherprofils 106 sichergestellt werden kann. Aufgrund der in Fig. 3 gewählten Darstellung ist nur ein Fluidhohlkanal 107 der Mehrzahl von Fluidhohlkanälen 107 dargestellt.

An einer Stirnseite 109 des Profilkörpers 101 münden die Fluidhohlkanäle 107 jeweils in eine Fluidaustrittsöffnung 111. Durch die Fluidhohlkanäle 107 strömendes Fluid kann aus den jeweiligen Fluidaustrittsöffnungen 111 austreten und kann in einem Fluidsammelrohr 113-1, 113-2 gesammelt und anschließend gemeinsam abgeführt werden. Das Fluidsammelrohr 113-1, 113-2 erstreckt sich entlang der Stirnseite 109 des Profilkörpers 101, bzw. der Stirnseite 108-1, 108-2 des Wärmetauscherprofils 106 und deckt die entsprechende Stirnseite 108-1, 108-2, 109 ab.

Das Fluidsammelrohr 113-1, 113-2 ist insbesondere aus Kunststoff geformt. Der Profilkörper 101 ist in dem Fluidsammelrohr 113-1, 113-2 durch eine Klemmverbindung gehalten. Hierbei umgreift das Fluidsammelrohr 113-1, 113-2 den Profilkörper 101 zumindest abschnittsweise, insbesondere die Aufnahmewand 103 und die Bodenwand 104 des Profilkörper 101, so dass die Fluidhohlkanäle 107 im Inneren des Fluidsammelrohrs 113-1, 113-2 münden.

Das Fluidsammelrohr 113-1, 113-2 ist schellenförmig mit einem ersten Haltesteg 115-1 und einem zweiten Haltesteg 115-2 geformt, wobei der Profilkörper 101 mit der Stirnseite 109 zwischen den ersten Haltesteg 115-1 und den zweiten Haltesteg 115-2 eingeführt ist. Der erste Haltesteg 115-1 liegt an der Aufnahmewand 103 an und der zweite Haltesteg 115-1 liegt hierbei an der Bodenwand 104 an. Der erste und zweite Haltesteg 115-1, 115-2 sind hierbei insbesondere einstückig mit dem Fluidsammelrohr 113-1, 113-2 gebildet.

Die Stirnseite 109 des Profilkörpers 101 schließt im Inneren des Fluidsammelrohrs 113-1, 113-2 bündig mit den Haltestegen 115-1, 115-2, insbesondere bündig mit den Enden der Haltestege 115-1, 115-2, ab. Das Fluidsammelrohr 113-1, 113-2 ist zwischen den Haltestegen 115-1, 115-2 durchtrennt, um die zwischen den Haltestegen 115-1, 115-2 geführte Stirnseite 109 aufzunehmen.

Somit kann eine einfach zu fertigende fluidtechnische Verbindung zwischen dem Fluidsammelrohr 113-1, 113-2 und dem Profilkörper 101 sichergestellt werden.

Hierbei ist das Fluidsammelrohr 113-1, 113-2 insbesondere ein einstückiges Kunststoffspritzgussteil ausgebildet.

Wie in der Fig. 3 nicht dargestellt ist, kann das Fluidsammelrohr 113-1, 113-2 seitlich einen Fluidstutzen aufweisen, um das Fluid aus dem Fluidsammelrohr 113-1, 113-2 abzuführen.

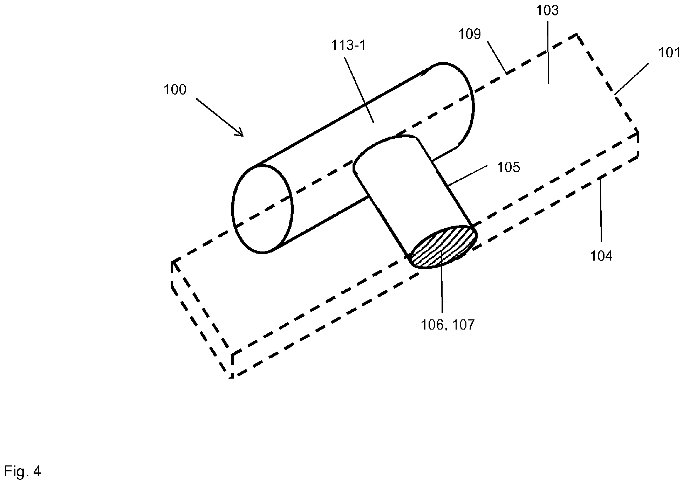

Fig. 4 zeigt eine Kunststoff-Spritzgussverbindung zwischen einem Fluidsammelrohr 113-1 und einem Profilkörper 101 eines Batterieträgers mit Wärmetauscher 100 gemäß der dritten Ausführungsform in einer perspektivischen Darstellung. Der in Fig. 4 nur schematisch dargestellte Profilkörper 101 weist eine Stirnseite 109, eine Aufnahmewand 103 für die Aufnahme zumindest eines elektrischen Batteriemoduls 102 und eine der Aufnahmewand 103 abgewandte Bodenwand 104 auf, wobei zwischen der Aufnahmewand 103 und der Bodenwand 104 Hohlraumkanäle 105 geformt sind.

Innerhalb des Profilkörpers 101 ist ein durch ein Fluid durchsetzbares

Wärmetauscherprofil 106 zur Temperierung des elektrischen Batteriemoduls 102 gebildet, wobei das Wärmetauscherprofil 106 eine Mehrzahl an Fluidhohlkanälen 107 aufweist. Die Fluidhohlkanäle 107 münden an der Stirnseite 109 in Fluidaustrittsöffnungen 111, welche in der Fig. 4 nicht dargestellt sind.

Ein erstes Fluidsammelrohr 113-1 zum Aufnehmen von aus den Fluidhohlkanälen 107 austretendem Fluid ist vorgesehen, welches sich entlang der Stirnseite 109 des Profilkörpers 101 erstreckt, und mit dem Wärmetauscherprofil 106 durch eine Klemmverbindung verbunden ist.

Ein zweites Fluidsammelrohr 113-2, welche an einer der Stirnseite 109 abgewandten Stirnseite 109 des Profilkörpers 101, durch eine Klemmverbindung gehalten ist, ist in der Fig. 4 nicht dargestellt.

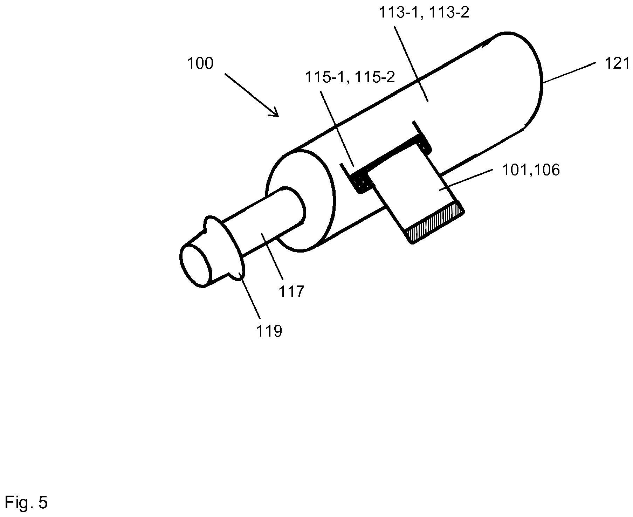

Fig. 5 zeigt ein Fluidstutzen 117 eines Fluidsammelrohrs 113-1, 113-2 eines Batterieträgers mit Wärmetauscher 100.

Das Fluidsammelrohr 113-1, 113-2 des Batterieträgers mit Wärmetauscher 100 weist seitlich einen Fluidstutzen 117 zum Abführen von Fluid aus dem Fluidsammelrohr 113-1, 113-2 auf. Der Fluidstutzen 117 ist endseitig an das Fluidsammelrohr 113-1, 113-2 angeformt. Der Fluidstutzen 117 weist eine umlaufende Ringlamelle 119 für die kraftschlüssige Befestigung des Fluidstutzens 117 z.B. mit einer Verbindungsleitung auf. Das Fluidsammelrohr 113-1, 113-2 ist an einem dem Fluidstutzen 117 abgewandten Ende 121 fluiddicht abgeschlossen. Durch den Fluidstutzen 117 kann aus den Fluidhohlkanälen 107 strömendes Fluid wirksam aus dem Fluidsammelrohr 113-1, 113-2 ausgeleitet werden.

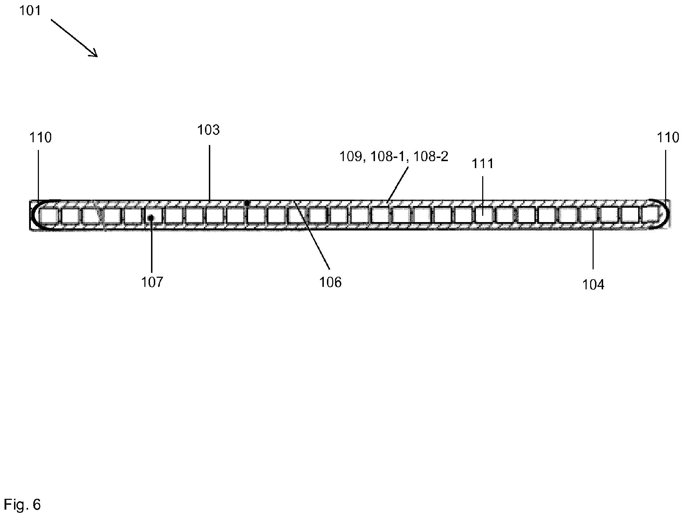

Fig. 6 zeigt ein Wärmetauscherprofil in einer stirnseitigen Ansicht. Das Wärmetauscherprofil 106 ist in dem Profilkörper 101 integriert, also innerhalb des Profilkörpers 101 gebildet. Der Profilkörper 101 weist eine Aufnahmewand 103 für die Aufnahme des Batteriemoduls 102 auf, und weist eine der Aufnahmewand 103 abgewandte Bodenwand 104 auf. Das innerhalb des Profilkörpers 101 gebildete Wärmetauscherprofil 106 weist Profilkanten 110 auf, welche insbesondere als abgerundete Profilkanten 110 ausgebildet sind.

Zwischen der Aufnahmewand 103 und der Bodenwand 104 sind eine Mehrzahl von Fluid-führenden Fluidhohlkanälen 107 gebildet, welche ausgebildet sind Fluid zu leiten, um Wärme dem auf der Aufnahmewand 103 angeordneten Batteriemodul 102 zuzuführen, bzw. um Wärme von dem auf der Aufnahmewand 103 angeordneten Batteriemodul 102 abzuführen.

Die Fluidhohlkanäle 107 verlaufen in dem Profilkörper 101 beispielsweise geradlinig nebeneinander, wodurch eine parallele Anordnung von Fluidhohlkanälen 107 entsteht. Die Fluidhohlkanäle 107 können voneinander beabstandet angeordnet sein, wodurch eine wirksame thermische Kopplung mit der Aufnahmewand 103 über die gesamte Fläche des Wärmetauscherprofils 106 sichergestellt werden kann.

An einer Stirnseite 109 des Profilkörpers 101, bzw. an einer Stirnseite 108-1, 108-2 des Wärmetauscherprofils 106 münden die Fluidhohlkanäle 107 jeweils in eine Fluidaustrittsöffnung 111. Durch die Fluidhohlkanäle 107 strömendes Fluid kann aus den jeweiligen Fluidaustrittsöffnungen 111 austreten und kann in einem in Fig. 6 nicht dargestellten Fluidsammelrohr 113-1, 113-2 gesammelt und anschließend gemeinsam abgeführt werden.

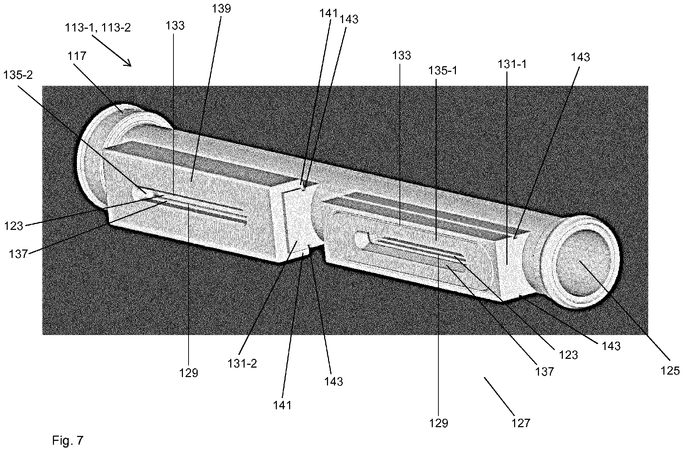

Fig. 7 zeigt ein Fluidsammelrohr eines Batterieträgers mit Wärmetauscher 100 gemäß einer vierten Ausführungsform.

Das Fluidsammelrohr 113-1, 113-2 ist insbesondere aus Kunststoff geformt und ist insbesondere als Kunststoffspritzgussteil geformt. In Fig. 7 nicht dargestellte Wärmetauscherprofile 106 sind mit dem Fluidsammelrohr 113-1, 113-2 durch eine Klemmverbindung verbunden. Hierbei münden die in Fig. 7 nicht dargestellten Fluidhohlkanäle 107 des Wärmetauscherprofils 106 im Inneren des Fluidsammelrohrs 113-1, 113-2. Somit kann eine einfach zu fertigende fluidtechnische Verbindung zwischen dem Fluidsammelrohr 113-1, 113-2 und dem Wärmetauscherprofil 106 sichergestellt werden.

Um eine wirksame Klemmverbindung zwischen dem Wärmetauscherprofil 106 und dem Fluidsammelrohr 113-1, 113-2 sicherzustellen weist das Fluidsammelrohr 113-1, 113-2 zumindest einen Aufnahmedurchbruch 123 auf, insbesondere eine Mehrzahl von nebeneinander angeordneten Aufnahmedurchbrüchen 123 auf. Die Aufnahmedurchbrüche 123 verbinden einen Innenraum 125 des Fluidsammelrohrs 113-1, 113-2 mit einem Außenraum 127 des Fluidsammelrohrs 113-1, 113-2.

Ein in Fig. 7 nicht dargestelltes Wärmetauscherprofil 106 kann durch den zumindest einen Aufnahmedurchbruch 123 in das Fluidsammelrohr 113-1, 113-2 eingesteckt werden, so dass die in dem Wärmetauscherprofil 106 geformten Fluidhohlkanäle 107 in den Innenraum 125 des Fluidsammelrohrs 113-1, 113-2 münden. Die Verbindung zwischen dem Wärmetauscherprofil 106 und dem Fluidsammelrohr 113-1, 113-2 wird durch eine Klemmverbindung sichergestellt, wobei der den jeweiligen Aufnahmedurchbruch 123 begrenzende Wandungsabschnitt 129 des Fluidsammelrohrs 113-1, 113-2 das jeweilige Wärmetauscherprofil 106 mit Kraft beaufschlagt, um einen wirksamen Sitz des Wärmetauscherprofils 106 in dem Aufnahmedurchbruch 123 sicherzustellen. Der Aufnahmedurchbruch 123 ist insbesondere als ein rechteckiger oder langlochförmiger Aufnahmedurchbruch 123 geformt.

Die Klemmverbindung zwischen dem Wärmetauscherprofil 106 und dem Fluidsammelrohrs 113-1, 113-2 ist hierbei eine lösbare Verbindung, wobei die lösbare Klemmverbindung zwischen dem Wärmetauscherprofil 106 und dem Fluidsammelrohrs 113-1, 113-2 beschädigungsfrei lösbar ist. Eine beschädigungsfrei lösbare Klemmverbindung bedeutet, dass die Klemmverbindung zwischen dem Wärmetauscherprofil 106 und dem Fluidsammelrohrs 113-1, 113-2 lösbar ist, ohne das Wärmetauscherprofil 106 oder das Fluidsammelrohrs 113-1, 113-2 beim Lösen der Klemmverbindung zu beschädigen. Das Lösen der Klemmverbindung kann hierbei insbesondere durch ein Ausstecken des Wärmetauscherprofils 106 aus dem Fluidsammelrohr 113-1, 113-2 sichergestellt werden.

Durch die lösbare Klemmverbindung zwischen dem Wärmetauscherprofil 106 und dem Fluidsammelrohr 113-1, 113-2 kann ein wirksamer modularer Aufbau des Batterieträgers mit Wärmetauscher 100 sichergestellt werden, da bei der Montage des Batterieträgers mit Wärmetauscher 100 lediglich das Wärmetauscherprofil 106 in das Fluidsammelrohr 113-1, 113-2 eingesteckt werden muss, und da bei der Demontage des Batterieträgers mit Wärmetauscher 100 lediglich das Wärmetauscherprofil 106 aus dem Fluidsammelrohr 113-1, 113-2 ausgesteckt werden muss.

Um einen stabilen Kontakt zwischen dem Wärmetauscherprofil 106 und dem Fluidsammelrohr 113-1, 113-2 sicherzustellen, weist das Fluidsammelrohr 113-1, 113-2 zumindest einen Klemmabschnitt 131-1, 131-2 auf, welcher einstückig mit dem Fluidsammelrohr 113-1, 113-2 geformt ist. Wird das Fluidsammelrohr 113-1, 113-2 in einem Spritzgussverfahren hergestellt sind das Fluidsammelrohr 113-1, 113-2 und der zumindest eine Klemmabschnitt 131-1, 131-2 insbesondere als ein gemeinsames Spritzgussformteil geformt.

In dem zumindest einen Klemmabschnitt 131-1, 131-2 ist jeweils eine Aufnahmeöffnung 123 zur Aufnahme des Wärmetauscherprofils 106 geformt. In dem Klemmabschnitt 131-1, 131-2 ist ferner jeweils eine Klemmabschnittaussparung 133 geformt, in welcher jeweils ein Dichtungselement 135-1, 135-2 aufgenommen ist, um eine fluiddichte Verbindung zwischen dem Fluidsammelrohr 131-1, 131-2 und dem Wärmetauscherprofil 106 sicherzustellen. Das Dichtungselement 135-1, 135-2 weist hierbei einen Dichtungsdurchbruch 137 auf, welcher insbesondere fluchtend zu der Aufnahmeöffnung 123 des Fluidsammelrohrs 113-1, 113-2 angeordnet ist.

Die in Fig. 7 nicht dargestellten Wärmetauscherprofile 106 können jeweils durch den Dichtungsdurchbruch 137 des jeweiligen Dichtungselements 135-1, 135-2 und durch die jeweilige Aufnahmeöffnung 123 des Fluidsammelrohrs 113-1, 113-2 in das Fluidsammelrohr 113-1, 113-2 eingesteckt und durch eine Klemmverbindung gehalten werden.

Die Klemmabschnittaussparung 133 des Klemmabschnitts 131-1, 131-2 ist insbesondere als eine langlochförmige Klemmabschnittaussparung 133 ausgebildet, in welcher ein entsprechend oval geformtes Dichtungselement 135-1, 135-2 aufgenommen ist.

Wie in Bezug auf ein erstes Dichtungselement 135-1 in Fig. 7 dargestellt ist, kann das erste Dichtungselement 135-1 und ein entsprechender erster Klemmabschnitt 131-1 des Fluidsammelrohrs 113-1, 113-2 einteilig, insbesondere als ein Spritzgussformteil, geformt sein. Hierbei wird die einteilige Ausbildung des ersten Dichtungselements 135-1 und des ersten Klemmabschnitts 131-1 insbesondere dadurch erreicht, dass ein Zweikomponenten-Spritzguss verwendet wird, bei dem das erste Dichtungselement 135-1 aus einem ersten Kunststoff geformt ist, und bei dem der erste Klemmabschnitt 131-1 aus einem zum ersten Kunststoff unterschiedlichen zweiten Kunststoff geformt ist.

Wie in Bezug auf ein zweites Dichtungselement 135-2 in Fig. 7 dargestellt ist, kann das zweite Dichtungselement 135-2 und ein entsprechender zweiter Klemmabschnitt 131-2 des Fluidsammelrohrs 113-1, 113-2 insbesondere nicht einteilig geformt sein. Hierbei ist das zweite Dichtungselement 135-2 als ein gegenüber dem zweiten Klemmabschnitt 131-2 separates Bauteil ausgebildet, welches in die Klemmabschnittaussparung 133 des zweiten Klemmabschnitts 131-2 aufgenommen ist.

Um hierbei eine wirksame Befestigung des zweiten Dichtungselements 135-2 an dem zweiten Klemmabschnitt 131-2 sicherzustellen, wird ein Befestigungselement 139 verwendet, welches das zweite Dichtungselement 135-2 und das an dem zweiten Dichtungselement 135-2 anliegende Wärmetauscherprofil 106 mit Kraft beaufschlagt, um eine fluiddichte Verbindung zwischen dem zweiten Dichtungselement 135-2 und dem Wärmetauscherprofil 106 sicherzustellen.

Das Befestigungselement 139 weist zumindest einen Befestigungsvorsprung 141 auf, wobei der Befestigungsvorsprung 141 jeweils in eine Befestigungsnut 143 an dem zweiten Klemmabschnitt 131-2 eingreift. Insbesondere weist das Befestigungselement 139 zwei Befestigungsvorsprünge 141 auf, welche auf einander abgewandten Seiten des Befestigungselements 139 angeordnet sind, wobei die beiden Befestigungsvorsprünge 141 jeweils in eine Befestigungsnut 143 eingreifen, wobei die beiden Befestigungsnuten 143 auf einander abgewandten Seiten des Klemmabschnitts 131-1, 131-2 angeordnet sind.

Durch das Befestigungselement 139 kann eine wirksame Befestigung des in der Aufnahmeöffnung 123 aufgenommenen Wärmetauscherprofils 106 sichergestellt werden, welche auch hohen mechanischen Belastungen standhält.

Wie in der Fig. 7 dargestellt ist, weist auch der erste Klemmabschnitt 131-1 Befestigungsnuten 143 zur Aufnahme von Befestigungsvorsprüngen 141 eines Befestigungselements 139 auf, so dass auch das erste Dichtungselement 135-1 in dem ersten Klemmabschnitt 131-1 durch ein Befestigungselement 139 befestigt werden kann.

Auch wenn dies in Fig. 7 nicht dargestellt ist, kann das Fluidsammelrohr 131-1, 131-2 zumindest einen Aufnahmedurchbruch 123 aufweisen, bzw. kann das Fluidsammelrohr 131-1, 131-2 eine Mehrzahl von, insbesondere zwei, drei, vier, fünf, sechs, sieben, acht, neun oder zehn, nebeneinander angeordneten Aufnahmedurchbrüchen 123 aufweisen. Hierbei weist der Batterieträger mit Wärmetauscher 100 zumindest ein Wärmetauscherprofil 106 auf, welche in den zumindest einen Aufnahmedurchbruch 123 eingeführt ist und klemmbar mit dem Fluidsammelrohr 113-1, 113-2 verbunden ist. Der Batterieträger mit Wärmetauscher 100 kann eine Mehrzahl von, insbesondere zwei, drei, vier, fünf, sechs, sieben, acht, neun oder zehn, Wärmetauscherprofile 106 aufweisen, welche jeweils nebeneinander in die jeweiligen nebeneinander angeordneten Aufnahmedurchbrüchen 123 eingeführt sind und klemmbar mit dem Fluidsammelrohr 113-1, 113-2 verbunden sind.

Auch wenn dies in Fig. 7 nicht dargestellt ist, kann das Fluidsammelrohr 131-1, 131-2 zumindest einen Klemmabschnitt 131-1, 131-2 aufweisen, bzw. kann das Fluidsammelrohr 131-1, 131-2 eine Mehrzahl von, insbesondere zwei, drei, vier, fünf, sechs, sieben, acht, neun oder zehn, nebeneinanderangeordneten Klemmabschnitten 131-1, 131-2 aufweisen.

Das in der Fig. 7 dargestellte Fluidsammelrohr 131-1, 131-2 weist ferner seitlich einen Fluidstutzen 117 auf, durch welchen Fluid aus dem Fluidsammelrohr 131-1, 131-2 wirksam abgeführt werden kann.

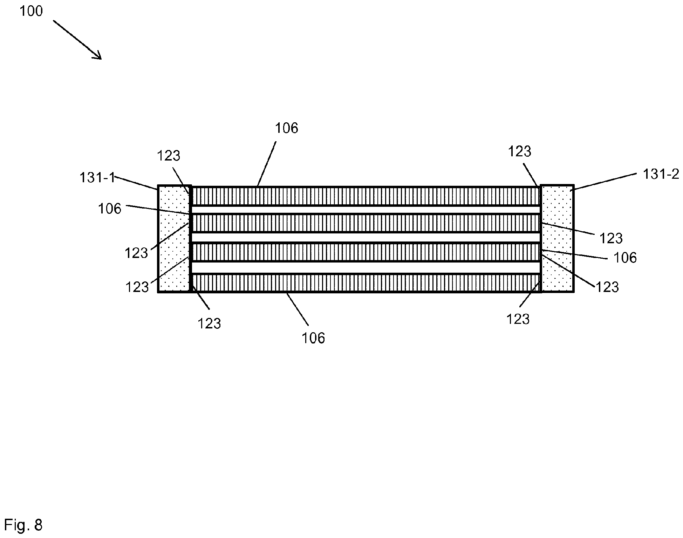

Fig. 8 zeigt eine schematische Darstellung eines Batterieträgers mit Wärmetauscher 100 in Aufsicht. Der Batterieträger mit Wärmetauscher 100 weist ein erstes Fluidsammelrohr 131-1 und ein dem ersten Fluidsammelrohr 131 gegenüberliegendes zweites Fluidsammelrohr 131-2 auf. In den Fluidsammelrohren 113-1, 113-2 sind schematisch dargestellte nebeneinander angeordnete Aufnahmedurchbrüche 123 zur Aufnahme von Wärmetauscherprofilen 106 geformt.

Der Batterieträger mit Wärmetauscher 100 weist eine Mehrzahl von, insbesondere zwei, drei, vier, fünf, sechs, sieben, acht, neun, oder zehn, Wärmetauscherprofilen 106 auf, welche nebeneinander in dem Batterieträger mit Wärmetauscher 100 angeordnet und in die Aufnahmedurchbrüche 123 der Fluidsammelrohre 131-1, 131-2 eingesteckt sind. Hierbei sind die Wärmetauscherprofile 106 insbesondere parallel zueinander angeordnet. Hierbei erstrecken sich die Wärmetauscherprofile 106 insbesondere quer zu den Fluidsammelrohren 131-1, 131-2.

Durch lösbare Verbindungen zwischen den Wärmetauscherprofilen 106 und dem Fluidsammelrohren 131-1, 131-2 kann ein vorteilhaft modularer, Lattenrost-artiger Batterieträger mit Wärmetauscher 100 bereitgestellt werden.

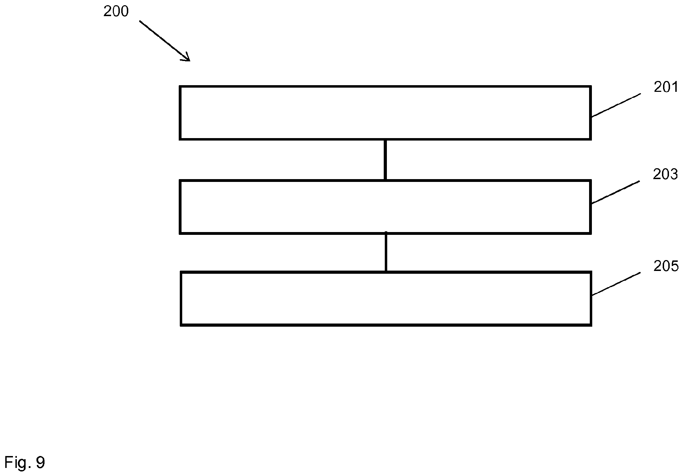

Fig. 9 zeigt ein Verfahren zum Herstellen eines Batterieträgers mit Wärmetauscher 100 für die Aufnahme zumindest eines elektrischen Batteriemoduls 102 in einem Fahrzeug.

Das Verfahren 200 umfasst als ersten Verfahrensschritt das Bereitstellen 201 eines Profilkörpers 101, welcher eine Aufnahmewand 103 für die Aufnahme des elektrischen Batteriemoduls 102 aufweist.

Das Verfahren 200 umfasst als zweiten Verfahrensschritt das Bereitstellen 203 eines durch ein Fluid durchsetzbaren Wärmetauscherprofils 106 zur Temperierung des elektrischen Batteriemoduls 102, wobei das Wärmetauscherprofil 106 eine Mehrzahl von Fluid-führenden Fluidhohlkanälen 107 aufweist, welche an einer Stirnseite 108-1, 108-2 des Wärmetauscherprofils 106 jeweils in eine Fluidaustrittsöffnung 111 münden.

Das Verfahren 200 umfasst als dritten Verfahrensschritt das Klemmen 205 des Wärmetauscherprofils 106 an ein Fluidsammelrohr 113-1, 113-2 zum Aufnehmen von aus der jeweiligen Fluidaustrittsöffnung 111 austretendem Fluid, um das Fluidsammelrohr 113-1, 113-2 mittels einer Klemmverbindung an dem Wärmetauscherprofil 106 zu befestigen.

### Bezugszeichenliste

- 100: Batterieträger mit Wärmetauscher
- 101: Profilkörper
- 102: Elektrisches Batteriemodul
- 103: Aufnahmewand
- 104: Bodenwand
- 105: Hohlraumkanal
- 106: Wärmetauscherprofil
- 107: Fluidhohlkanäle
- 108-1: Erste Stirnseite des Wärmetauscherprofils
- 108-2: Zweite Stirnseite des Wärmetauscherprofils
- 109: Stirnseite des Profilkörpers
- 110: Profilkanten
- 111: Fluidaustrittsöffnung
- 113-1: Erstes Fluidsammelrohr
- 113-2: Zweites Fluidsammelrohr
- 115-1: Erster Haltesteg
- 115-2: Zweiter Haltesteg
- 117: Fluidstutzen
- 119: Ringlamelle
- 121: Dem Fluidstutzen abgewandtes Ende des Fluidsammelrohrs
- 123: Aufnahmedurchbruch
- 125: Innenraum des Fluidsammelrohrs
- 127: Außenraum des Fluidsammelrohrs
- 129: Wandungsabschnitt des Fluidsammelrohrs
- 131-1: Erster Klemmabschnitt
- 131-2: Zweiter Klemmabschnitt
- 133: Klemmabschnittaussparung
- 135-1: Erstes Dichtungselement
- 135-2: Zweites Dichtungselement
- 137: Dichtungsdurchbruch
- 139: Befestigungselement
- 141: Befestigungsvorsprung
- 143: Befestigungsnut
- 200: Verfahren zum Herstellen eines Batterieträgers mit Wärmetauscher
- 201: Bereitstellen eines Profilkörpers
- 203: Bereitstellen eines Wärmetauscherprofils
- 205: Klemmen des Wärmetauscherprofils an ein Fluidsammelrohr

## Patentansprüche

1. Batterieträger mit Wärmetauscher (100) für die Aufnahme zumindest eines elektrischen Batteriemoduls (102) in einem Fahrzeug, mit:
einem Profilkörper (101), welcher eine Aufnahmewand (103) für die Aufnahme des elektrischen Batteriemoduls (102) aufweist;
ein durch ein Fluid durchsetzbares Wärmetauscherprofil (106) zur Temperierung des elektrischen Batteriemoduls (102), wobei das Wärmetauscherprofil (106) eine Mehrzahl von Fluid-führenden Fluidhohlkanälen (107) aufweist, welche an einer Stirnseite (108-1, 108-2) des Wärmetauscherprofils (106) jeweils in eine Fluidaustrittsöffnung (111) münden; und
einem Fluidsammelrohr (113-1, 113-2) zum Aufnehmen von aus der jeweiligen Fluidaustrittsöffnung (111) austretendem Fluid, wobei das Wärmetauscherprofil (106) mit dem Fluidsammelrohr (113-1, 113-2) klemmbar verbunden ist.

2. Batterieträger mit Wärmetauscher (100) nach Anspruch 1, wobei das Wärmetauscherprofil (106) mit dem Fluidsammelrohr (113-1, 113-2) lösbar verbunden ist, und wobei die Klemmverbindung zwischen dem Wärmetauscherprofil (106) und dem Fluidsammelrohr (113-1, 113-2) insbesondere beschädigungsfrei lösbar ist.

3. Batterieträger mit Wärmetauscher (100) nach Anspruch 1 oder 2, wobei das Fluidsammelrohr (113-1, 113-2) einen Aufnahmedurchbruch (123) aufweist, wobei das Wärmetauscherprofil (106) in dem Aufnahmedurchbruch (123) aufgenommen, insbesondere eingesteckt, ist, um die Klemmverbindung zwischen dem Wärmetauscherprofil (106) und dem Fluidsammelrohr (113-1, 113-2) zu bilden.

4. Batterieträger mit Wärmetauscher (100) nach Anspruch 3, wobei das Fluidsammelrohr (113-1, 113-2) einen Klemmabschnitt (131-1, 131-2) aufweist, welcher einstückig mit dem Fluidsammelrohr (113-1, 113-2) geformt ist, wobei in dem Klemmabschnitt (131-1, 131-2) der Aufnahmedurchbruch (123) zur Aufnahme des Wärmetauscherprofils (106) geformt ist, und wobei der Klemmabschnitt (131-1, 131-2) und das Fluidsammelrohr (113-1, 113-2) insbesondere als ein Spritzgussformteil geformt sind.

5. Batterieträger mit Wärmetauscher (100) nach einem der vorangehenden Ansprüche, wobei das Fluidsammelrohr (113-1, 113-2) ein Dichtungselement (135-1, 135-2) aufweist, um eine fluiddichte Verbindung zwischen dem Fluidsammelrohr (113-1, 113-2) und dem mit dem Fluidsammelrohr (113-1, 113-2) verbundenen Wärmetauscherprofil (106) bereitzustellen, wobei insbesondere in dem Klemmabschnitt (131-1, 131-2) eine Klemmabschnittaussparung (133) geformt ist, in welcher das Dichtungselement (135-1, 135-2) aufgenommen ist.

6. Batterieträger mit Wärmetauscher (100) nach Anspruch 5, wobei die Klemmabschnittaussparung (133) als eine langlochförmige Klemmabschnittaussparung (133) geformt ist, wobei das Dichtungselement (135-1, 135-2) als ein oval geformtes Dichtungselement (135-1, 135-2) geformt ist, das in der langlochförmigen Klemmabschnittaussparung (133) aufgenommen ist.

7. Batterieträger mit Wärmetauscher (100) nach Anspruch 5 oder 6, wobei das Dichtungselement (135-1, 135-2) einen Dichtungsdurchbruch (137) aufweist, und wobei der Dichtungsdurchbruch (137) fluchtend zu dem Aufnahmedurchbruch (123) des Fluidsammelrohrs (113-1, 113-2) angeordnet ist.

8. Batterieträger mit Wärmetauscher (100) nach einem der vorangehenden Ansprüche 5 bis 7, wobei das Dichtungselement (135-1, 135-2) aus einem ersten Kunststoff geformt ist, wobei der Klemmabschnitt (131-1, 131-2) aus einem zum ersten Kunststoff unterschiedliche zweiten Kunststoff geformt ist, wobei das Dichtungselement (135-1, 135-2) und der Klemmabschnitt (131-1, 131-2) einteilig geformt sind, und wobei insbesondere das Dichtungselement (135-1, 135-2) und der Klemmabschnitt (131-1, 131-2) als ein gemeinsames Spritzgussformteil geformt sind.

9. Batterieträger mit Wärmetauscher (100) nach einem der vorangehenden Ansprüche 5 bis 8, ferner umfassend ein Befestigungselement (139), welches ausgebildet ist, das Dichtungselement (135-1, 135-2) und das an dem Dichtungselement (135-1, 135-2) anliegende Wärmetauscherprofil (106) mit Kraft zu beaufschlagen, um einen fluiddichten Kontakt zwischen dem Dichtungselement (135-1, 135-2) und dem Wärmetauscherprofil (106) bereitzustellen, wobei das Befestigungselement (139) insbesondere zumindest einen Befestigungsvorsprung (141) aufweist, wobei der Klemmabschnitt (131-1, 131-2) insbesondere zumindest eine Befestigungsnut (143) aufweist, wobei das Befestigungselement (139) mit dem Befestigungsvorsprung (141) in die Befestigungsnut (143) des Klemmabschnitts (131-1, 131-2) eingreift, um das Dichtungselement (135-1, 135-2) wirksam in dem Klemmabschnitt (131-1, 131-2) zu befestigen.

10. Batterieträger mit Wärmetauscher (100) nach einem der vorangehenden Ansprüche, wobei das Fluidsammelrohr (113-1, 113-2) eine Mehrzahl von nebeneinander angeordneten Aufnahmedurchbrüchen (123) aufweist, wobei der Batterieträger mit Wärmetauscher (100) eine Mehrzahl von durch ein Fluid durchsetzbare und nebeneinander angeordnete Wärmetauscherprofile (106) aufweist, wobei die Wärmetauscherprofile (106) jeweils in einem der Aufnahmedurchbrüche (123) aufgenommen sind, und wobei die Wärmetauscherprofile (106) jeweils mit dem Fluidsammelrohr (113-1, 113-2) klemmbar verbunden sind.

11. Batterieträger mit Wärmetauscher (100) nach Anspruch 10, wobei der Batterieträger mit Wärmetauscher (100) ein erstes Fluidsammelrohr (113-1) und ein dem ersten Fluidsammelrohr (113-1) gegenüberliegendes zweites Fluidsammelrohr (113-2) aufweist, wobei das erste und zweite Fluidsammelrohr (113-1, 113-2) jeweils eine Mehrzahl von nebeneinander angeordneten weiteren Aufnahmedurchbrüchen (123) aufweist, wobei die Wärmetauscherprofile (106) eine erste Stirnseite (108-1) und eine der ersten Stirnseite (108-1) abgewandte zweite Stirnseite (108-2) aufweisen, wobei die Wärmetauscherprofile (106) an der ersten Stirnseite (108-1) mit dem ersten Fluidsammelrohr (113-1) verbunden sind, und wobei die Wärmetauscherprofile (106) an der zweiten Stirnseite (108-2) mit dem zweiten Fluidsammelrohr (113-2) verbunden sind.

12. Batterieträger mit Wärmetauscher (100) nach einem der vorangehenden Ansprüche, wobei das zumindest eine Wärmetauscherprofil (106) in dem Profilkörper (101) integriert ist, und/oder wobei das Wärmetauscherprofil (106) mit dem Profilkörper (101) lösbar verbunden ist.

13. Batterieträger mit Wärmetauscher (100) nach Anspruch 12, wobei das Wärmetauscherprofil (106) innerhalb des Profilkörpers (101) gebildet ist, wobei der Profilkörper (101) eine Stirnseite (109) und eine der Aufnahmewand (103) abgewandte Bodenwand (104) aufweist, wobei die Fluidhohlkanäle (107) zwischen der Aufnahmewand (103) und der Bodenwand (104) verlaufen und an der Stirnseite (109) jeweils in die jeweilige Fluidaustrittsöffnung (111) münden; und wobei das Fluidsammelrohr (113-1, 113-2) an der Aufnahmewand (103) sowie an der Bodenwand (104) durch die Klemmverbindung gehalten ist.

14. Batterieträger mit Wärmetauscher (100) nach Anspruch 13, wobei das Fluidsammelrohr (113-1, 113-2) die Aufnahmewand (103) und die Bodenwand (104) zumindest abschnittsweise umgreift, um die Klemmverbindung zu bilden, so dass die Fluidhohlkanäle (107) im Inneren des Fluidsammelrohrs (113-1, 113-2) münden.

15. Batterieträger mit Wärmetauscher (100) nach einem der vorstehenden Ansprüche, wobei das Fluidsammelrohr (113-1, 113-2) schellenförmig mit einem ersten Haltesteg (115-1) und einem zweiten Haltesteg (115-2) geformt ist, wobei das Wärmetauscherprofil (106) mit der Stirnseite (109) zwischen den ersten Haltesteg (115-1) und den zweiten Haltesteg (115-2) eingeführt ist, und wobei der erste und zweite Haltesteg (115-1, 115-2) insbesondere einstückig mit dem Fluidsammelrohr (113-1, 113-2) gebildet sind.

16. Batterieträger mit Wärmetauscher (100) nach Anspruch 15, wobei die Stirnseite (109) des Profilkörpers (101) oder die Stirnseite (108-1, 108-2) des Wärmetauscherprofils (106) im Inneren des Fluidsammelrohrs (113-1, 113-2) bündig mit den Haltestegen (115-1, 115-2), insbesondere bündig mit den Enden der Haltestege (115-1, 115-2), abschließt.

17. Batterieträger mit Wärmetauscher (100) nach Anspruch 15 oder 16, wobei das Fluidsammelrohr (113-1, 113-2) zwischen den Haltestegen (115-1, 115-2) durchtrennt ist, um die zwischen den Haltestegen (115-1, 115-2) geführte Stirnseite (108-1, 108-2, 109) aufzunehmen.

18. Batterieträger mit Wärmetauscher (100) nach einem der vorstehenden Ansprüche, wobei das Fluidsammelrohr (113-1, 113-2) seitlich einen Fluidstutzen (117) zum Abführen von Fluid aus dem Fluidsammelrohr (113-1, 113-2), aufweist, wobei der Fluidstutzen (117) insbesondere an das Fluidsammelrohr (113-1, 113-2) endseitig angeformt ist.

19. Batterieträger mit Wärmetauscher (100) nach Anspruch 18, wobei das Fluidsammelrohr (113-1, 113-2) an einem dem Fluidstutzen (117) abgewandten Ende (121) fluiddicht abgeschlossen ist.

20. Verfahren (200) zum Herstellen eines Batterieträgers mit Wärmetauscher (100) für die Aufnahme zumindest eines elektrischen Batteriemoduls (102) in einem Fahrzeug, mit:
Bereitstellen (201) eines Profilkörpers (101), welcher eine Aufnahmewand (103) für die Aufnahme des elektrischen Batteriemoduls (102) aufweist,
Bereitstellen (203) eines durch ein Fluid durchsetzbaren Wärmetauscherprofils (106) zur Temperierung des elektrischen Batteriemoduls (102), wobei das Wärmetauscherprofil (106) eine Mehrzahl von Fluid-führenden Fluidhohlkanälen (107) aufweist, welche an einer Stirnseite (108-1, 108-2) des Wärmetauscherprofils (106) jeweils in eine Fluidaustrittsöffnung (111) münden; und
Klemmen (205) des Wärmetauscherprofils (106) an ein Fluidsammelrohr (113-1, 113-2) zum Aufnehmen von aus der jeweiligen Fluidaustrittsöffnung (111) austretendem Fluid, um das Fluidsammelrohr (113-1, 113-2) mittels einer Klemmverbindung an dem Wärmetauscherprofil (106) zu befestigen.

21. Kühlsystem für ein Fahrzeug, mit einem Fluid-führenden Kühlkreislauf, wobei in dem Kühlkreislauf ein Fahrzeugkühler zum Kühlen eines Fahrzeugantriebs angeordnet ist, und wobei der Batterieträger mit Wärmetauscher (100) nach einem der vorangehenden Ansprüche 1 bis 19 an den Fluid-führenden Kühlkreislauf fluidtechnisch angeschlossen ist, so dass das Wärmetauscherprofil (106) durch zumindest einen Teil des Fluids des Fluid-führenden Kühlkreislaufs durchströmbar ist, um die elektrische Batterie zu temperieren.
